# EUROPÄISCHE PATENTANMELDUNG

(11) **EP 1 155 724 A1**
(43) Veröffentlichungstag der Anmeldung: **21.11.2001**
(21) Anmeldenummer: 00110757.2
(22) Anmeldetag: 19.05.2000
(51) Int. Cl.: B01D 45/10, B01D 46/24

(54) **Filterkerze**

(71) Anmelder: Munters Euroform GmbH, 52072 Aachen (DE)
(72) Erfinder: Gröver, Christian, 52134 Herzogenrath (DE)
(74) Vertreter: Patentanwälte Hauck, Graalfs, Wehnert, Döring, Siemons

(57) **Zusammenfassung**

Es wird eine Filterkerze mit mindestens einer Koaleszierschicht und/oder mindestens einer Fein- und/oder Feinstabscheideschicht beschrieben. Die Filterkerze besitzt ferner mindestens eine Tropfenabscheiderschicht, die eine Vielzahl von im wesentlichen radialen Strömungskanälen mit mindestens einer Strömungsumlenkung aufweist. Durch die Tropfenabscheiderschicht werden die Koaleszierschicht und/oder Fein- und/oder Feinstabscheideschicht entlastet, so daß die Effizienz der Filterkerze verbessert und deren Lebensdauer verlängert werden.

## Beschreibung

Die vorliegende Erfindung betrifft eine Filterkerze mit mindestens eienr Koaleszierschicht und/oder mindestens einer Fein- und/oder Feinstabscheideschicht.

Derartige Filterkerzen sind bekannt. Sie werden zur Entfernung von Flüssigkeiten aus Gasströmen verwendet und haben in der Regel eine etwa hohlzylindrische Form. Die Kerzen können horizontal oder vertikal angeströmt werden, wobei eine radiale oder axiale Anströmung und axiale oder radiale Abströmung möglich sind.

Bei der Koaleszierschicht handelt es sich um eine Schicht, die eine Agglomeration der im Gasstrom vorhandenen Aerosole bewirkt. Bei dieser Schicht handelt es sich vorzugsweise um eine sogenannte Coalescerschicht, d.h. um eine vorzugsweise aus einem Drahtgestrick bestehende Schicht, die die erwähnte Agglomerationsfunktion ausübt.

Mit Feinabscheideschicht ist eine Schicht gemeint, die Tröpfchen ab einer Größe von etwa 4-5 *µ*m abscheidet. Mit Feinstabscheideschicht ist eine Schicht gemeint, die Tröpfchen etwa bei einer Größe von 0,5 *µ*m abscheidet. Als Feinabscheideschicht findet vorzugsweise eine sogenannte Demisterschicht Verwendung, d.h. ein Tropfenabscheider vorzugsweise auf Drahtgestrickbasis, welcher einen Tropfenbereich zwischen 10-25 *µ*m abdeckt.

Derartige Kombinationen aus Koaleszierschichten und Fein- und/oder Feinstabscheideschichten haben den Nachteil, bei horizontaler Durchströmung und hohen Eintrittsbeladungen sehr empfindlich für Durchriß zu sein. Aus diesem Grund werden derartige Kombinationen meist vertikal durchströmt und bedürfen einer großen baulichen Fläche. Unter Ausnutzung der Kerzenbauform kann eine Anlage insgesamt kleiner dimensioniert werden, wobei sich hierbei jedoch wieder die ungünstige horizontale Durchströmung ergibt.

Es wurden verschiedene Versuche unternommen, die zwei Schichten voneinander zu trennen, um eine bessere Abscheideleistung und geringere Empfindlichkeit gegen Durchriß zu erzielen. Hierzu wurden radial angeordnete Blenden oder Zwischenräume eingesetzt.

Die bisher angewandten Methoden, einen Durchriß bei dieser Art von Filterkerze zu verhindern, wurden jedoch u.a. mit einem erhöhten Druckverlust erkauft.

Der Erfindung liegt die Aufgabe zugrunde, eine Filterkerze der angegebenen Art zu schaffen, die sich durch eine besonders effiziente Wirkungsweise auszeichnet (u.a. geringe Druckverluste, guter Schutz gegen Durchriß etc.).

Diese Aufgabe wird erfindungsgemäß bei einer Filterkerze der angegebenen Art dadurch gelöst, daß sie des weiteren mindestens eine Tropfenabscheiderschicht aufweist, die eine Vielzahl von im wesentlichen radialen Strömungskanälen mit mindestens einer Strömungsumlenkung besitzt.

Mit der erfindungsgemäß in der Filterkerze vorgesehenen mindestens einen Tropfenabscheiderschicht wird ein internes Dränagesystem zur besseren Ableitung der Flüssigkeiten aus der Filterkerze zur Verfügung gestellt. Durch die hierdurch erfolgte Entlastung von mindestens einer Koaleszierschicht und/oder Fein- und/oder Feinstabscheideschicht wird ein wirksamer Schutz gegen Durchriß bei einem niedrigeren Druckverlust erreicht. Insgesamt werden mit der erfindungsgemäß ausgebildeten Filterkerze folgende Vorteile erzielt:

Ein geringerer Druckverlust als vergleichbare Systeme;
höhere Strömungsgeschwindigkeiten als vergleichbare Systeme;
höhere Eintrittsbeladungen als vergleichbare Systeme und eine bessere Abscheideleistung.

Da die erfindungsgemäß vorgesehene Tropfenabscheiderschicht unter Einhaltung der physikalischen Grenzen in beliebigen Dicken und Größen gefertigt und in die Filterkerze eingebaut werden kann, lassen sich hiermit ohne weiteres Filterkerzen für jede notwendige Größe und jeden Durchsatz erstellen. Bereits vorhandene Kerzen alter Bauart können in einfacher Weise ausgetauscht werden. Es ist ein geringerer Platzbedarf als bei üblichen Vorabscheidesystemen, z.B. in der Chemieindustrie, erforderlich. Ferner kann auf bereits vorhandene Tropfenabscheiderprofile zugegriffen werden.

Erfindungsgemäß wird somit ein Tropfenascheiderprofil in den Aufbau einer Filterkerze integriert. Das Tropfenabscheiderprofil ist in der Lage, bei hohen Durchtrittsgeschwindigkeiten einen Großteil der anfallenden Flüssigkeit abzuscheiden und innerhalb des Profils abzuführen. Hierdurch wird eine nachgeschaltete Koaleszier- und/oder Fein- und/oder Feinstabscheideschicht entlastet, die dann durch die Entlastung bezüglich der Eintrittsbeladung weniger gefährdet ist für einen Durchriß, da die noch anfallende Restmenge an Flüssigkeit innerhalb der Kerze dräniert werden kann. Eine Flutung der nachgeschalteten Schicht(en) ist daher nicht mehr möglich, wodurch ein Durchriß verhindert wird.

Vorzugsweise ist die Tropfenabscheiderschicht eine Lamellentropfenabscheiderschicht. Lamellentropfenabscheider sind bekannt und befinden sich auf dem Markt. Besonders gut für den vorliegenden Einsatzzweck eignen sich das von der Anmelderin vertriebene Tropfenabscheiderprofil DH 170 sowie Weiterentwicklungen dieses Profils. Dieses Profil, das plattenförmig ausgebildet ist, besteht aus einer Vielzahl von im wesentlichen senkrecht zur Plattenebene verlaufenden miteinander verbundenen Lamellen, zwischen denen Strömungskanäle gebildet sind. Die Lamellen sind so ausgebildet, daß bei den dazwischen ausgebildeten Strömungskanälen vier Strömungsumlenkpunkte vorhanden sind. Die Strömungskanäle verlaufen im wesentlichen in radialer Richtung.

Um die hier beschriebene Filterkerze für chemisch aggressive Medien einsetzen zu können, muß die Tropfenabscheiderschicht aus von derartigen Medien nicht angegriffenen Materialien bestehen, beispielsweise Edelstahl.

Die erfindungsgemäß ausgebildete Filterkerze (Kerzenabscheider) besitzt vorzugsweise auf ihrer Innen- und/oder Außenseite ein Drahtgitter. Diese Drahtgitterkäfige erfüllen entsprechende Haltefunktionen für die dazwischen angeordneten Coalescer-, Demister- und Tropfenabscheiderschichten.

Vorzugsweise ist die Tropfenabscheiderschicht in Strömungsrichtung vor der oder einer Fein- und/oder Feinstabscheideschicht und/oder vor der oder einer Koaleszierschicht angeordnet. Bei dieser Ausführungsform wird daher mindestens eine dieser Schichten durch eine vorher erfolgte Dränage entlastet.

Bei einer speziellen Ausführungsform der Erfindung ist die Tropfenabscheiderschicht zwischen der oder einer Koaleszierschicht und der oder einer Fein- und/oder Feinstabscheideschicht angeordnet. Diese Ausführungsform findet insbesondere bei einem erhöhten Vorkommen von Aerosolen im Bereich von 3-8 *µ*m Anwendung. Der mit Flüssigkeit beladene Gasstrom trifft hierbei zuerst auf.die Koaleszierschicht, vorzugsweise Coalescerschicht, in der die vorkommenden Aerosole agglomeriert werden und hinter der Koaleszierschicht als Tropfen in der Größenordnung von 10-35 *µ*m austreten. Die in Strömungsrichtung nachfolgende Tropfenabscheiderschicht scheidet einen großen Teil der anfallenden Flüssigkeit (gebunden in den großen Tropfen) ab und führt die Flüssigkeit innerhalb der Schicht aus der Filterkerze heraus. Wenn beispielsweise als Tropfenabscheiderschicht das vorstehend erwähnte Lamellenprofil DH 170 verwendet wird, können bei Durchtrittsgeschwindigkeiten von bis zu 4 m/s ca. 80 % der anfallenden Flüssigkeit abgeschieden werden. Hierdurch wird die in Strömungsrichtung nachgeschaltete Fein/Feinstabscheideschicht (Demisterschicht), welche den Tropfenbereich zwischen 10-25 *µ*m abdeckt, entlastet und ist durch die Entlastung bezüglich der Eintrittsbeladung weniger gefährdet in bezug auf Durchriß, da die noch anfallende Restmenge an Flüssigkeit intern dräniert werden kann.

Bei einer anderen speziellen Ausführungsform der Erfindung ist die Tropfenabscheiderschicht in Strömungsrichtung vor der Koaleszierschicht angeordnet. Bei dieser Ausführungsform wird die hohe Flüssigkeitsbeladung (große Tropfen) vorzugsweise bereits beim Eintritt in die Kerze von der Tropfenabscheiderschicht abgefangen und zum größten Teil abgeführt. Eine Flutung von nachgeschalteten Koaleszier- und/oder Fein/Feinstabscheideschichten ist nicht mehr möglich, wodurch ein Durchriß verhindert wird.

Kombinationen aus den vorstehend geschilderten beiden Ausführungsformen sind möglich. So können beispielsweise zwei Tropfenabscheiderschichten zum Einsatz gelangen, und zwar eine in Strömungsrichtung vor der Koaleszierschicht und eine in Strömungsrichtung vor der Fein/Feinstabscheideschicht. Hierbei erfolgt eine doppelte Dränage, mit der eine besonders gute Effizienz und Schonung der Fein/Feinstabscheideschicht erreicht wird.

Bei einer anderen Ausführungsform der Erfindung ist die Tropfenabscheiderschicht in Strömungsrichtung hinter einer oder der Koaleszierschicht angeordnet. Bei dieser Ausführungsform, bei der die Filterkerze nur eine einzige Koaleszierschicht und keine Fein/Feinstabscheideschicht aufweisen kann, leitet die Tropfenabscheiderschicht die durch die Koaleszierschicht agglomerierten Tropfen nach unten ab. Diese Ausführungsform kommt insbesondere dann zur Anwendung, wenn eine Fein- oder Feinstabscheidung nicht erforderlich ist.

Durch die erfindungsgemäß vorgeschlagene Integration eines Tropfenabscheiderprofils in eine eine Koaleszierschicht und/oder Fein/Feinstabscheideschicht aufweisende Filterkerze werden daher die Abscheideleistung und insbesondere die Lebensdauer der Filterkerze erhöht.

Erfindungsgemäß wird vorzugsweise als Material für die Koaleszierschicht ein Coalescermaterial (Drahtgewirk, Drahtgewebe) eingesetzt. Für die Feinabscheideschicht wird vorzugsweise ein Demistermaterial (Drahtgewirk, Drahtgewebe) verwendet. Findet in der Filterkerze eine Feinstabscheideschicht allein oder zusätzlich zur Feinabscheideschicht Verwendung, so wird als Material für diese Schicht vorzugsweise Filterwatte eingesetzt, wobei Filterwatte jeglicher Form Anwendung finden kann. Mit diesem Material können Partikel ab 0,5 *µ*m abgeschieden werden. Durch die Anordnung einer Tropfenabscheiderschicht gerade vor diesem Material werden Durchrisse weitgehend ausgeschaltet.

Bei einer anderen Ausführungsform der Erfindung weist die Koaleszierschicht Agglomeratorstäbe auf, wie sie beispielsweise in der DE 195 03 842 A1 beschrieben sind. Derartige, einem Tropfenabscheider vorgeschaltete Agglomeratoren führen in bezug auf die Abscheidung zu besonders guten Ergebnissen. Die diesbezügliche Offenbarung der DE 195 03 842 A1 wird hiermit durch Bezugnahme in den vorliegenden Text aufgenommen.

In Weiterbildung der Erfindung weist die Filterkerze mindestens eine horizontal oder schräg oder konisch in die Kerze eingebaute Lochblende auf. Mit dieser Lochblende, die eine flache und/oder konische Bauform besitzen kann, kann eine interne Regulierung der Druckverteilung in Abhängigkeit vom Schichtmaterialtyp vorgenommen werden.

Eine andere Ausführungsform der Erfindung sieht vor, daß die mindestens eine Tropfenabscheiderschicht als tragendes Element der Kerze ausgebildet ist. Bei dieser Ausführungsform können daher das Innengitter und/oder Außengitter von ihren Haltefunktionen entlastet werden. Diese Ausführungsform bietet den weiteren Vorteil, daß die Kerze modular aufgebaut werden kann, wobei die notwendigen "Filtereinsätze" wie Inserts ausgetauscht werden können.

Noch eine andere Ausführungsform zeichnet sich dadurch aus, daß die Kerze einen Sumpf aufweist, der eine separate Dränage der Flüssigkeit aus der Tropfenabscheiderschicht und der Flüssigkeit aus der Fein- und/oder Feinstabscheideschicht ermöglicht. Dies kann unter Umständen, insbesondere bei Einsatz eines Spülsystems, gewährleisten, daß der größte Anteil der Spülflüssigkeit im Kreislauf gefahren werden kann, wenn der kleinere Anteil aus der Fein- und/oder Feinstabscheideschicht beispielsweise einem Recyclingprozeß zugeführt werden kann.

Die erfindungsgemäß ausgebildete Filterkerze weist zweckmäßigerweise ein Reinigungssystem auf. Dieses besitzt vorzugsweise ein zentrales Düsenrohr zur Abgabe von Sprühkegeln. Durch die Verwendung eines derartigen Reinigungssystems kann die erfindungsgemäß ausgebildete Filterkerze insbesondere in (bedingt) verschmutzter Umgebung eingesetzt werden, da mit Hilfe dieses internen Reinigungssystems (Düsenrohr bzw. Rohrlanze im Inneren der Kerze) und einer eventuellen Dauerbedüsung mit Hilfe der abgegebenen Sprühkegel eine Verstopfung der Fein/Feinstabscheideschichten und/oder Koaleszierschichten ausgeschlossen werden kann.

Die Erfindung wird nachfolgend anhand von Ausführungsbeispielen in Verbindung mit der Zeichnung im einzelnen erläutert. Von der Zeichnung zeigen:
- Figur 1: ein herausgeschnittenes Stück einer ersten Ausführungsform einer Filterkerze in räumlicher Ansicht;
- Figur 2: eine vergrößerte Draufsicht auf das Stück der Filterkerze der Figur 1;
- Figur 3: ein herausgeschnittenes Stück einer zweiten Ausführungsform einer Filterkerze in räumlicher Ansicht;
- Figur 4: eine vergrößerte Draufsicht auf das Stück der Filterkerze der Figur 3;
- Figur 5: ein herausgeschnittenes Stück einer dritten Ausführungsform einer Filterkerze in räumlicher Ansicht;
- Figur 6: eine vergrößerte Draufsicht auf das Stück der Filterkerze der Figur 5;
- Figur 7: ein herausgeschnittenes Stück einer vierten Ausführungsform einer Filterkerze in räumlicher Ansicht;
- Figur 8: eine vergrößerte Draufsicht auf das Stück der Filterkerze der Figur 7;
- Figur 9: ein herausgeschnittenes Stück einer fünften Ausführungsform einer Filterkerze in räumlicher Ansicht;
- Figur 10: eine vergrößerte Draufsicht auf das Stück der Filterkerze der Figur 9;
- Figur 11: eine mit einem Reinigungssystem versehene Filterkerze in räumlicher Ansicht, wobei ein Teil der Filterkerze entfernt ist;
- Figur 12: eine Draufsicht auf einen Teil der Tropfenabscheiderschicht;
- Figur 13: eine Draufsicht auf einen Teil einer weiteren Ausführungsform der Tropfenabscheiderschicht;
- Figur 14: eine Draufsicht auf einen Teil noch einer weiteren Ausführungsform der Tropfenabscheiderschicht; und
- Figur 15: eine mit einer Lochblende versehene Filterkerze in räumlicher Ansicht, wobei ein Teil der Filterkerze entfernt ist.

Die in den Figuren dargestellten Filterkerzen besitzen eine hohlzylindrische Form und werden bei den hier dargestellten Ausführungsformen vertikal, d.h. von unten nach oben, von innen angeströmt und etwa horizontal bzw. schräg nach oben durchströmt. Andere Strömungsrichtungen sind möglich und werden von der Erfindung mit umfaßt.

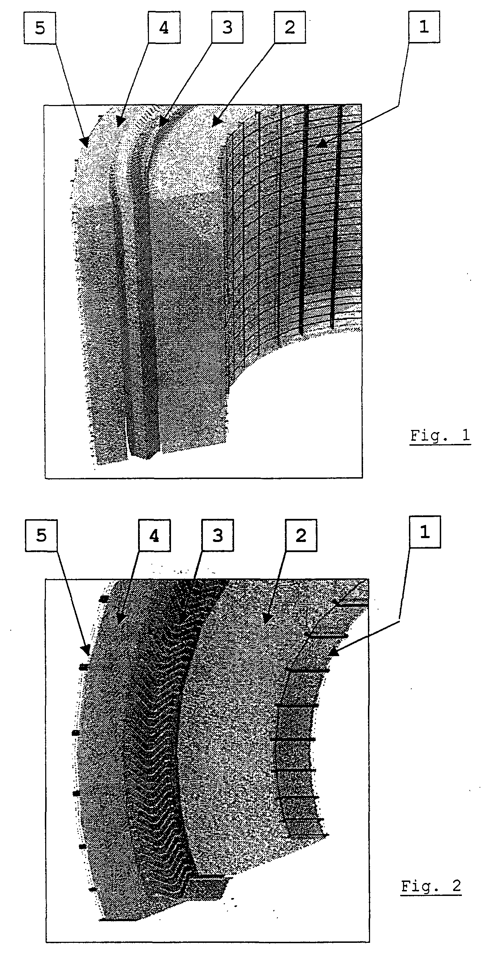

Die in den Figuren 1 und 2 dargestellte Filterkerze hat von innen nach außen, d.h. in den Figuren von rechts nach links, eine innere Drahtgitterschicht (Drahtgitterkäfig) 1, eine Coalescerschicht 2, eine Tropfenabscheiderschicht 3, eine Demisterschicht 4 und eine äußere Drahtgitterschicht (Drahtgitterkäfig) 5. Die beiden Drahtgitterschichten erfüllen Haltefunktionen in bezug auf die dazwischen angeordneten Schichten.

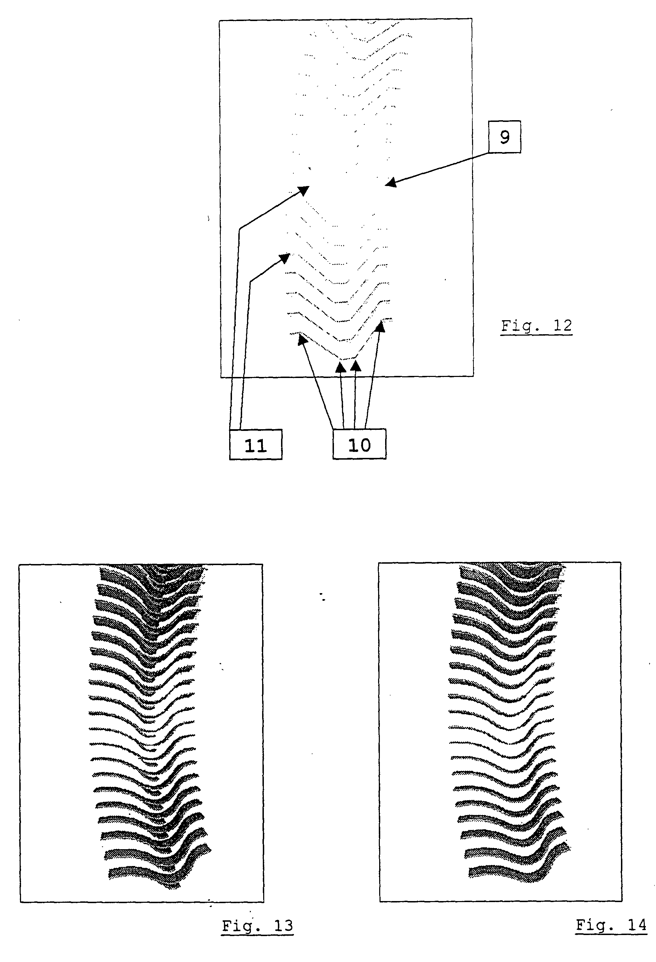

Die Coalescerschicht 2 besteht aus einem geeigneten Drahtgestrickmaterial, das bekannt ist und keinen Teil der vorliegenden Erfindung darstellt. Die Coalescerschicht dient zum Agglomerieren der im Gasstrom vorhandenen Aerosole, so daß diese hinter der Coalescerschicht als Tropfen in der Größenordnung von 10-50 *µ*m austreten. In Strömungsrichtung nach der Coalescerschicht 2 befindet sich eine Tropfenabscheiderschicht 3, bei der es sich bei diesem Ausführungsbeispiel um das Tropfenabscheiderlamellenprofil DH 170 der Anmelderin handelt. Figur 12 zeigt in der Draufsicht den Aufbau dieser Schicht. Sie besteht aus einer Vielzahl von Lamellen 11, die sich etwa radial von der Innenseite zur Außenseite der Schicht mit gleichem Abstand voneinander erstrecken. Zwischen den Lamellen sind etwa radiale Strömungskanäle 9 gebildet, die vier Strömungsumlenkpunkte 10 besitzen, wie in Figur 12 gezeigt. Diese Strömungsumlenkpunkte 10 bewirken beim Durchströmen eine Abscheidung der im Gasstrom mitgeführten Tropfen, die an den Lamellen abgeschieden werden und bei senkrechter oder schräger Anordnung der Filterkerze nach unten strömen, somit aus dem Gasstrom abgeschieden werden. Das hier dargestellte Lamellenprofil DH 170 ist in der Lage, bei Durchtrittsgeschwindigkeiten von bis zu 4 m/s ca. 80 % der anfallenden Flüssigkeit, die in den großen Tropfen gebunden ist, abzuscheiden und innerhalb des Profils abzuführen.

In Strömungsrichtung nach der Tropfenabscheiderschicht 3 ist eine Demisterschicht 4 angeordnet, die aus einem Drahtgestrickmaterial besteht und als solche bekannt ist, d.h. ebenfalls keinen Teil der vorliegenden Erfindung darstellt. Diese Demisterschicht deckt den Tropfenbereich zwischen 10-25 *µ*m ab. Sie wird durch die vorgeschaltete Tropfenabscheiderschicht 3 bezüglich der Eintrittsbeladung weitgehend entlastet, so daß sie eine erhöhte Lebensdauer besitzt. Am Außenrand der Kerze folgt schließlich eine weitere Drahtgitterschicht 5.

Figur 2 zeigt den Aufbau der Kerze in vergrößerter Draufsicht.

Die vorstehend beschriebene Ausführungsform findet insbesondere bei einem erhöhten Vorkommen von Aerosolen im Bereich von 3 µm Verwendung.

Eine zweite Ausführungsform einer Filterkerze ist in den Figuren 3 und 4 dargestellt. Auch diese Ausführungsform wird von innen nach außen, d.h. in der Figur von rechts nach links, durchströmt. Nach der inneren Drahtgitterschicht 1 folgt hierbei eine erste Tropfenabscheiderschicht 3, die aus dem gleichen DH 170 Profil besteht wie bei der vorstehend beschriebenen Ausführungsform. In Strömungsrichtung nach der ersten Tropfenabscheiderschicht 3 sind eine Coalescerschicht 2 und eine zweite Tropfenabscheiderschicht 3 angeordnet. Es folgt dann eine Demisterschicht 4. Den äußeren Abschluß bildet wieder eine Drahtgitterschicht 5. Auch die Coalescerschicht und Demisterschicht bestehen aus den gleichen Materialien wie bei der vorstehend beschriebenen Ausführungsform.

Die vorstehend beschriebene Ausführungsform findet insbesondere dann Anwendung, wenn eine hohe Eintrittsbeladung, viel Flüssigkeit und große Tropfen vorhanden sind. Die hohe Flüssigkeitsbeladung wird bereits beim Eintritt des Gasstromes in die Kerze von der ersten Tropfenabscheiderschicht 3 aufgefangen und zum größten Teil abgeführt (durch Schwerkraft). Eine Flutung der nachgeschalteten Coalescer/ Demisterkombination ist nicht mehr möglich, so daß auch hier die Lebensdauer dieser Schichten verlängert wird. Zusätzlich entlastet die zweite Tropfenabscheiderschicht 3 die Demisterschicht 4.

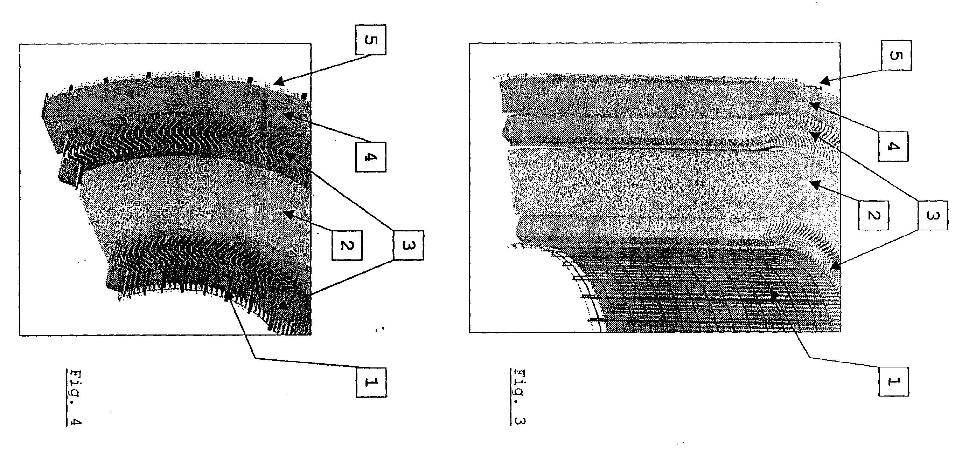

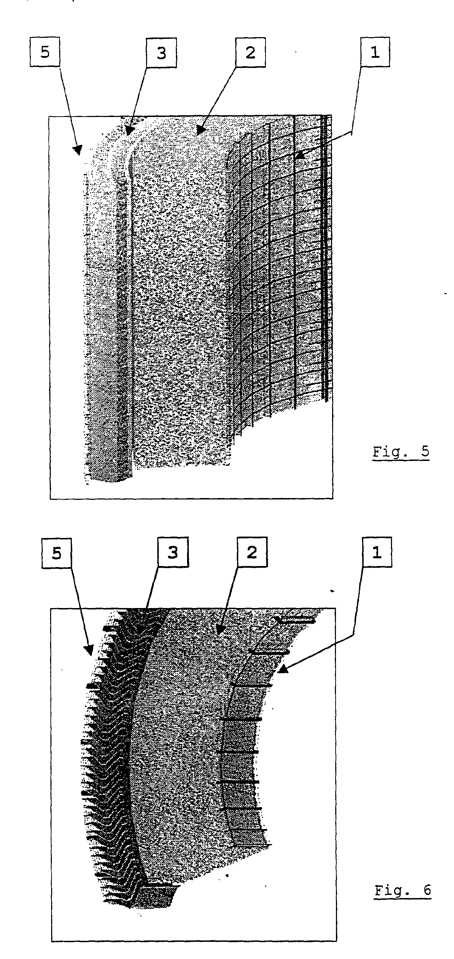

Bei der in den Figuren 5 und 6 gezeigten Ausführungsform ist eine Tropfenabscheiderschicht 3 in Strömungsrichtung nach einer Coalescerschicht 2 angeordnet. Bei dieser Ausführungsform besteht die Filterkerze, abgesehen von einer inneren und äußeren Drahtgitterschicht 1, 5, nur aus einer Coalescerschicht 2, der eine Tropfenabscheiderschicht 3 zum Ableiten der in der Coalescerschicht 2 agglomerierten Tropfen nachgeschaltet ist.

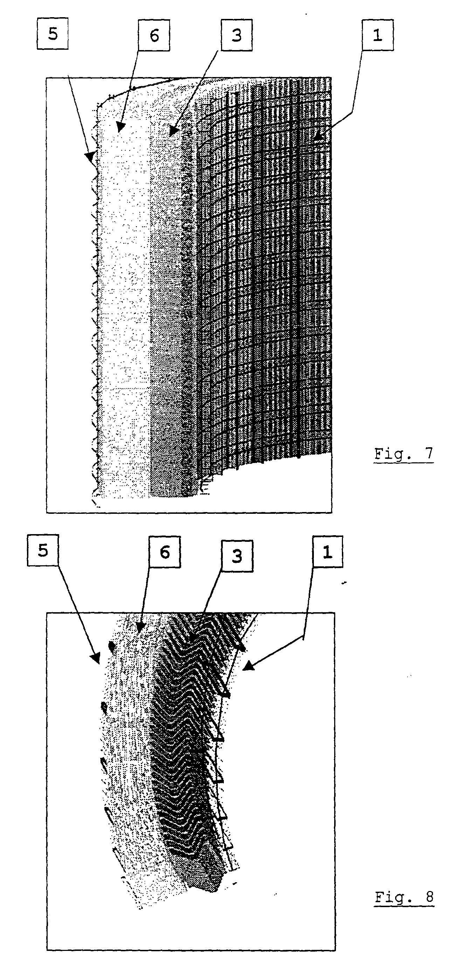

Bei der Ausführungsform der Figuren 7 und 8 ist keine Coalescerschicht vorgesehen. In Strömungsrichtung vor einer Feinstabscheideschicht aus Filterwatte 6 ist eine Tropfenabscheiderschicht 3 angeordnet. Diese Tropfenabscheiderschicht führt größere Tropfen ab und entlastet somit die Feinstabscheideschicht aus dem Filterwattenmaterial 6.

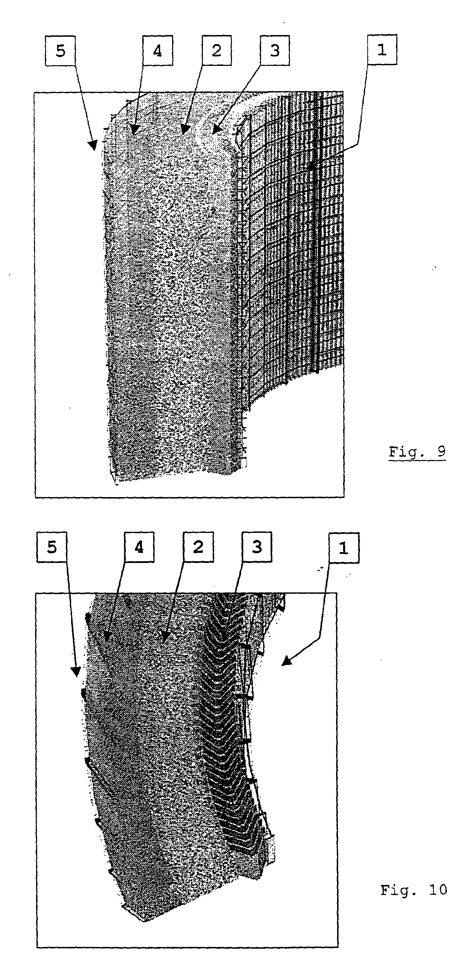

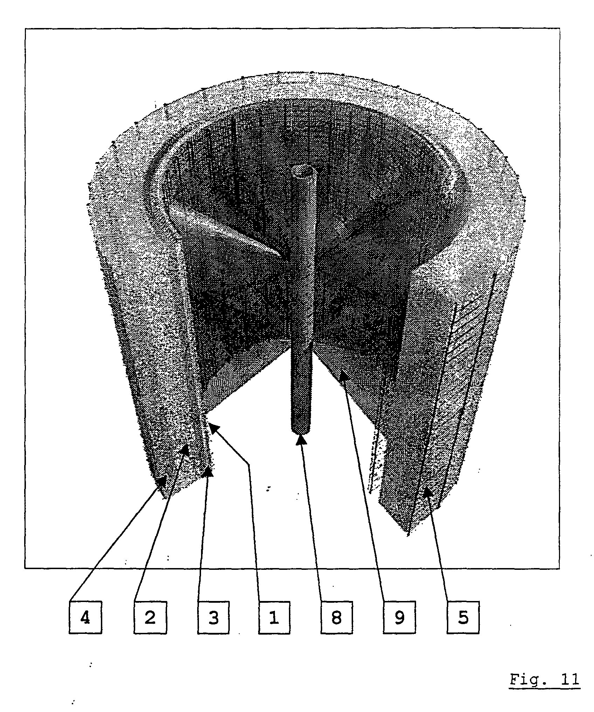

Die Ausführungsform der Figuren 9 und 10 zeigt eine Filterkerze, bei der eine Tropfenabscheiderschicht 3 in Strömungsrichtung vor einer Coalescerschicht 2 und einer sich an dieser anschließenden Demisterschicht 4 angeordnet ist. Die Tropfenabscheiderschicht 3 bewirkt somit eine Entlastung beider Schichten 2 und 4.

Figur 11 zeigt in räumlicher Ansicht eine Filterkerze mit in Strömungsrichtung von innen nach außen einer inneren Drahtgitterschicht 1, einer hierauf folgenden Tropfenabscheiderschicht 3, einer hierauf folgenden Coalescerschicht 2, einer hierauf folgenden Demisterschicht 4 und einer äußeren Drahtgitterschicht 5. Mittig im Inneren der Kerze befindet sich ein Düsenrohr 8, mit dem eine unter Druck stehende Flüssigkeit (Wasser) in den inneren Bereich der Filterkerze geführt wird. Das Düsenrohr weist entsprechende Düsen auf, die die Abgabe von Sprühkegeln 9 in Richtung auf das Kerzenmaterial ermöglichen. Auf diese Weise kann ein Zusetzen der Demisterschicht 4 und Coalescerschicht 2 vermieden werden.

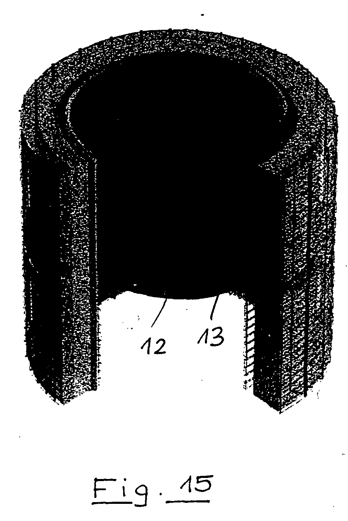

Die Figuren 13 und 14 zeigen in der Draufsicht weitere Varianten von Lamellentropfenabscheidern, die als Tropfenabscheiderschicht 3 in der Filterkerze Verwendung finden können. Figur 13 zeigt eine Ausführungsform, bei der die Strömungsumlenkpunkte nicht so prägnant hervortreten wie bei der Ausführungsform der Figur 12. Mit anderen Worten, dieses Lamellenprofil ist wellenförmig ausgebildet. Es besitzt im mittleren Bereich eine vorstehende Nase, die eine Fangtasche zum Auffangen von Flüssigkeitströpfchen und zum Ableiten derselben bildet.

Der in Figur 14 dargestellte Lamellenabscheider entspricht im wesentlichen dem der Figur 13, jedoch ohne Nase.

Figur 15 zeigt eine Ausführungsform einer Filterkerze, die zur internen Regulierung der Druckverteilung eine eingebaute Lochblende 12 aufweist. Bei dieser Lochblende handelt es sich um eine flache, schräge oder konische Blende, die in Abständen mit entsprechenden Löchern 13 versehen ist. Die Lochblende erstreckt sich mit Ansätzen durch die Kerzenwand nach außen und hält die eingesetzten Lamellenprofile und/oder Agglomeratorstäbe.

## Patentansprüche

1. Filterkerze mit mindestens einer Koaleszierschicht (2) und/oder mindestens einer Fein- und/oder Feinstabscheideschicht (4), **dadurch gekennzeichnet, daß** sie des weiteren mindestens eine Tropfenabscheiderschicht (3) aufweist, die eine Vielzahl von im wesentlichen radialen Strömungskanälen (9) mit mindestens einer Strömungsumlenkung (10) besitzt.

2. Filterkerze nach Anspruch 1, **dadurch gekennzeichnet, daß** die Tropfenabscheiderschicht (3) eine Lamellentropfenabscheiderschicht ist.

3. Filterkerze nach Anspruch 1 oder 2, **dadurch gekennzeichnet, daß** die Tropfenabscheiderschicht (3) in Strömungsrichtung vor der oder einer Fein- und/oder Feinstabscheideschicht (4) angeordnet ist.

4. Filterkerze nach einem der vorangehenden Ansprüche, **dadurch gekennzeichnet, daß** die Tropfenabscheiderschicht (3) in Strömungsrichtung vor der oder einer Koaleszierschicht (2) angeordnet ist.

5. Filterkerze nach einem der vorangehenden Ansprüche, **dadurch gekennzeichnet, daß** die Tropfenabscheiderschicht (3) in Strömungsrichtung zwischen einer Koaleszier- (2) und einer Fein- und/oder Feinstabscheideschicht (4) angeordnet ist.

6. Filterkerze nach einem der vorangehenden Ansprüche, **dadurch gekennzeichnet, daß** eine erste Tropfenabscheiderschicht (3) in Strömungsrichtung vor der Koaleszierschicht (2) und eine zweite Tropfenabscheiderschicht (3) in Strömungsrichtung vor der Fein- und/oder Feinstabscheideschicht (4) angeordnet sind.

7. Filterkerze nach Anspruch 1 oder 2, **dadurch gekennzeichnet, daß** die Tropfenabscheiderschicht (3) in Strömungsrichtung hinter einer oder der Koaleszierschicht (2) angeordnet ist.

8. Filterkerze nach einem der vorangehenden Ansprüche, **dadurch gekennzeichnet, daß** sie auf ihrer Innen- und/oder Außenseite ein Drahtgitter (1, 5) aufweist.

9. Filterkerze nach einem der vorangehenden Ansprüche, **dadurch gekennzeichnet, daß** sie für eine vertikale Anströmung von innen außengebildet ist.

10. Filterkerze nach einem der vorangehenden Ansprüche, **dadurch gekennzeichnet, daß** die Koaleszierschicht (2) als Coalescerschicht ausgebildet ist.

11. Filterkerze nach einem der Ansprüche 1 bis 9, **dadurch gekennzeichnet, daß** die Koaleszierschicht Agglomeratorstäbe aufweist.

12. Filterkerze nach einem der vorangehenden Ansprüche, **dadurch gekennzeichnet, daß** die Feinabscheideschicht (4) als Demisterschicht ausgebildet ist.

13. Filterkerze nach einem der vorangehenden Ansprüche, **dadurch gekennzeichnet, daß** die Feinstabscheideschicht (4) aus Filterwatte (6) besteht.

14. Filterkerze nach einem der vorangehenden Ansprüche, **dadurch gekennzeichnet, daß** sie mindestens eine horizontal oder schräg in die Kerze eingebaute oder als Konus ausgeführte Lochblende (12) aufweist.

15. Filterkerze nach einem der vorangehenden Ansprüche, **dadurch gekennzeichnet, daß** die mindestens eine Tropfenabscheiderschicht (3) als tragendes Element der Kerze ausgebildet ist.

16. Filterkerze nach einem der vorangehenden Ansprüche, **dadurch gekennzeichnet, daß** sie einen Sumpf aufweist, der eine separate Dränage der Flüssigkeit aus der Tropfenabscheiderschicht (3) und der Flüssigkeit aus der Fein- und/oder Feinstabscheideschicht (4) ermöglicht.

17. Filterkerze nach einem der vorangehenden Ansprüche, **dadurch gekennzeichnet, daß** sie ein Reinigungssystem mit zentralem Düsenrohr (8) zur Abgabe von Sprühkegeln (9) aufweist.
